# EUROPÄISCHE PATENTSCHRIFT

(11) **EP 1 790 895 B1**
(45) Veröffentlichungstag und Bekanntmachung des Hinweises auf die Patenterteilung: **07.01.2015**
(21) Anmeldenummer: 06022899.6
(22) Anmeldetag: 03.11.2006
(51) Int. Cl.: A62C 2/06, F16L 5/04

(54) **Wand- oder Deckendurchführung**
Wall- or ceiling feedthrough
Passage traversant un mur ou un plafond

(30) Priorität: 24.11.2005 DE 202005018356 U
(43) Veröffentlichungstag der Anmeldung: 30.05.2007
(73) Patentinhaber: PROMAT GmbH, 40878 Ratingen (DE)
(72) Erfinder: Schlüter, Andreas, 45481 Mülheim an der Ruhr (DE)
(74) Vertreter: Ring & Weisbrodt

(56) Entgegenhaltungen:
- EP-A1- 1 396 675
- WO-A1-00/68608
- DE-A1- 2 627 447
- DE-U1- 29 508 849
- GB-A- 2 334 770

## Beschreibung

Die Erfindung betrifft eine Wand- oder Deckendurchführung für ein Kunststoffrohr, mit einem auf dem Kunststoffrohr angeordneten Streifen aus Brandschutzmaterial, und mit einer Manschette zur Fixierung des Streifens aus Brandschutzmaterial auf dem Kunststoffrohr.

Die Erfindung betrifft ferner eine Verwendung eines Brandschutzbandes für eine Wand- oder Deckendurchführung für ein Kunststoffrohr, das durch eine Wand oder eine Decke geführt ist, mit einem um das Kunststoffrohr schlingbaren Streifen aus Brandschutzmaterial, und mit einer Manschette zur Fixierung des Streifens aus Brandschutzmaterial auf dem Kunststoffrohr.

Kunststoffrohre sind brennbar. Im Brandfall besteht ohne Brandschutz die Gefahr des Übertritts von Feuer und Rauch von einem Raum über die Wand- oder Deckendurchführung in den benachbarten Raum. Bei bestimmten Gebäudetypen sind daher gesetzlich Brandschutzabschottungen vorgeschrieben. Diese verschließen die erforderlichen Öffnungen für die Durchführung von Kunststoffrohren durch Wände oder Decken im Brandfall und verhindern damit die Ausbreitung von Feuer und Rauch in andere Brandabschnitte, andere Geschosse, Treppenräume, allgemein zugängliche Flure usw.

Zur Vermeidung des Übertritts von Feuer und Rauch im Brandfall ist es bekannt, ein Brandschutzband vollständig um das Kunststoffrohr zu wickeln, das unter Hitzeeinwirkung aufschäumt und die Wand- oder Deckendurchführung verschließt. Bei der Anordnung des Brandschutzbandes unterscheidet man zwei alternative Anordnungen: Bei einer Anordnung wird das Brandschutzmaterial unmittelbar zwischen dem Kunststoffrohr und der Wand- oder Deckendurchführung angeordnet. Hierzu kann das Brandschutzband in einer oder mehreren Lagen um das Kunststoffrohr geschlungen sein. Die Wand- oder Decke der Durchführung selbst sorgt für eine Ausdehnung des Brandschutzmaterials im Brandfall ausschließlich in Richtung auf das im Brandfall schmelzende Kunststoffrohr. Eine derartige Abschottung ist aus der DE 296 00 856 U1 bekannt.

In einer zweiten Anordnung wird das Brandschutzmaterial in Form eines vollständigen Ringes von außen auf das Kunststoffrohr der Wand- oder Deckendurchführung aufgesetzt. Die Brandschutzmanschette umschließt dabei das Brandschutzmaterial und sorgt im Brandfall für ein Expandieren des Brandschutzmaterials ausschließlich nach innen. Die Manschette wird an der Wand oder der Decke, durch die das Kunststoffrohr geführt ist, koaxial befestigt. Die WO 00/68608 A 1 beschreibt eine derartige Wand- oder Deckendurchführung.

Das Prinzip der bekannten Rohrabschottungen hat sich grundsätzlich bewährt. Bei allen Anordnungen wird das Brandschutzmaterial vollständig um das Kunststoffrohr gewickelt und wird die Befestigung an der Wand und Decke koaxial vorgenommen, durch die das Kunststoffrohr geführt ist. Bei Rohren mit größerem Durchmesser ist es erforderlich, Brandschutzmaterial in ausreichender Menge zur Verfügung zu stellen, so dass in der Praxis die Brandschutzbänder mehrfach um das Kunststoffrohr gewickelt werden. Dies führt dazu, dass die Rohre nicht mehr in unmittelbarer Nähe von angrenzenden Wänden oder Decken durch eine Wand oder Decke hindurchgeführt werden können, da stets ein Abstand für das Brandschutzmaterial - und ggf. noch ein zusätzlicher Abstand für die Handhabung bzw. Befestigung des Brandschutzmaterials mittels der Manschette und Verschraubung - vorgesehen sein muß. Dies hat zur Folge, dass die Rohre in einigem Abstand zu angrenzenden Wänden durch die Wand hindurchgeführt werden, was nicht nur unter optischen, sondern auch unter platztechnischen Gesichtspunkten unvorteilhaft ist.

Der Erfindung liegt ausgehend von dem bekannten Stand der Technik die **Aufgabe** zugrunde, ein Brandschutzband zu schaffen, das eine platzsparende Anordnung der Wand- oder Deckendurchführung gestattet.

Zur **Lösung** dieser Aufgabe ist die eingangs beschriebene Wand- oder Deckendurchführung erfindungsgemäß dadurch gekennzeichnet, dass der Streifen aus Brandschutzmaterial und die Manschette lediglich teilweise um das Kunststoffrohr geschlungen sind. Vorteilhafterweise ist die Manschette an einer Wand oder Decke befestigt, die an die Wand oder Decke angrenzt, durch die die Durchführung geht.

Die Erfindung verlässt die herkömmliche Befestigungstechnik des Brandschutzmaterials auf dem Kunststoffrohr vollständig. Während es ursprünglich vorgesehen war, das Brandschutzmaterial unter Umständen mehrfach um das Kunststoffrohr zu wickeln und die so geschaffene Wicklung in den Ringraum zwischen Kunststoffrohr und der Wandführung zu schieben oder alternativ die Manschette zur Fixierung des Streifens aus Brandschutzmaterial über ihren gesamten Umfang zu sichern, schlägt die Erfindung vor, dass die Manschette das Kunststoffrohr nicht vollständig umgreift. Vorteilhafterweise stützt sich die Manschette in Weiterbildung der Erfindung an der an die Wand- oder Deckendurchführung angrenzenden Wand oder Decke ab und ist dort fixiert. Jede dieser Maßnahmen haben zur Folge, dass das Kunststoffrohr unmittelbar an eine Wand oder Decke angrenzend durch eine Wand oder Decke hindurchgeführt werden kann.

Der Erfindung liegt die Erkenntnis zugrunde, dass es - in Abkehr der herkömmlichen Auffassung der Fachwelt - nicht erforderlich ist, das Kunststoffrohr vollständig mit einer Brandschutzmanschette zu umschlingen. Vielmehr genügt eine lediglich teilweise Umschlingung, wobei zusätzliche Abstützarbeit und Brandschutzleistung die angrenzende Wand bzw. Decke leisten kann. Hierzu ist die Manschette an der angrenzenden Wand oder der Decke und nicht wie bisher an der Wand oder der Decke der Durchführung befestigt. Die Menge des Brandschutzmaterials kann über die Dicke (und/oder Breite) des Brandschutzstreifens gesteuert werden.

Die Manschette kann wie bisher an der Wand oder Decke befestigt werden, durch die das Rohr geht. Alternativ oder zusätzlich bieten sich für die Wanddurchführung zwei vorteilhafte Ausführungsformen an. Bei der ersten Ausführungsform wird das Kunststoffrohr an einer an die Wanddurchführung angrenzenden geraden Wand durch eine Decke oder eine Wand durchgeführt. Die Manschette ist dann beidseitig des Rohres an der angrenzenden geraden Wand (oder Decke) befestigt.

Alternativ ist die Wand- oder Deckendurchführung in unmittelbarer Nähe von zwei angrenzenden Wänden oder Decken angeordnet. Dies ist beispielsweise dort der Fall, wo zwei Seitenwände (beispielsweise in einem Winkel von 90°) aufeinandertreffen und an dieser Stelle das Kunststoffrohr durch die Decke geführt wird. Die Manschette ist vorteilhafterweise also beidseitig des Rohrs jeweils an einer Wand oder Decke befestigt, die winkelig zueinander angeordnet ist.

Im Brandfall sorgt die Manschette dafür, dass sich das Brandschutzmaterial im wesentlichen ausschließlich in Richtung nach innen expandiert. Hierzu muss die Manschette so angeordnet sein, dass sie entsprechende Kräfte aufnehmen kann. Vorzugsweise ist die Manschette mit der Wand und/oder Decke verschraubt.

In Weiterbildung der Erfindung wird vorgeschlagen, dass die Wand- oder Deckendurchführung mindestens ein Befestigungselement umfasst, das in Einsteckrichtung der Manschette zur Befestigung der Manschette an der Wand und/oder Decke abgewinkelt von der Manschette abgeht. Das Befestigungselement dient zur Befestigung der Manschette an der Wand und/oder Decke. Es kann beispielsweise eine oder mehrere Öffnung(en) für eine oder mehrere Schraube(n) aufweisen.

Zweckmäßigerweise ist das Befestigungselement lösbar mit der Manschette verbunden. Die Manschette kann beispielsweise Einschübe aufweisen, die in Erstreckungsrichtung der Manschette angeordnet sind, wobei das Befestigungselement in die Einschübe eingreift.

Die Erfindung wird ferner gelöst durch eine Verwendung eines erfindungsgemäßen Brandschutzbandes für eine Wand- oder Deckendurchführung für ein Kunststoffrohr das durch eine Wand oder Decke geführt ist, wobei das Brandschutzband erfindungsgemäß so ausgebildet ist, dass es das Kunststoffrohr im eingebauten Zustand nur teilweise umgreift. Zweckmäßigerweise ist die Manschette an mindestens einer Wand und/oder einer Decke befestigbar, die auf die Wand oder die Decke mit der Wanddurchführung stößt.

Vorzugsweise weist das Brandschutzband ein Befestigungselement auf, das in Erstreckungsrichtung der Manschette zur Befestigung der Manschette an der Wand und/oder Decke abgewinkelt von der Manschette abgeht. Zusätzlich oder alternativ kann das Brandschutzband an der die Durchführung aufweisende Decke oder Wand befestigt werden.

Vorteilhafterweise ist das Befestigungselement lösbar mit der Manschette verbunden. Hierzu kann die Manschette Einschübe aufweisen, die in Erstreckungsrichtung der Manschette angeordnet sind, wobei das Befestigungselement mit den Einschüben in Eingriff bringbar ist. Eine derartige Anordnung gestattet den flexiblen Einsatz des Brandschutzbandes, und zwar insbesondere dann, wenn das Brandschutzband selbst in verschiedenen Längen zur Verfügung gestellt wird oder beispielsweise ablängbar ist. Je nach Anforderung werden die Befestigungselemente in den entsprechenden Einschüben eingehakt und anschließend das Brandschutzband an der Wand und/oder Decke befestigt.

Im Folgenden wird die Erfindung anhand eines bevorzugten Ausführungsbeispiels im Zusammenhang mit der beigefügten Zeichnung näher erläutert. Die Zeichnung zeigt in:
- Fig. 1: in schematischer Darstellung eine Schnittansicht einer herkömmlichen Wand- oder Deckendurchführung für ein Kunststoffrohr;
- Fig. 2: eine Darreichungsform des erfindungsgemäßen Brandschutzbandes;
- Fig. 3: in schematischer Darstellung eine Schnittansicht einer ersten Anordnung eines erfindungsgemäßen Brandschutzbandes;
- Fig. 4: in schematischer Darstellung eine Schnittansicht einer zweiten Anordnung eines erfindungsgemäßen Brandschutzbandes;
- Fig. 5: in perspektivischer Ansicht ein Ausführungsbeispiel eines erfindungsgemäßen Brandschutzbandes;
- Fig. 6: in perspektivischer Ansicht ein Befestigungselement für das erfindungsgemäße Brandschutzband;
- Fig. 7: in perspektivischer Ansicht ein weiteres erfindungsgemäßes Ausführungsbeispiel; und
- Fig. 8: in perspektivischer Darstellung ein weiteres erfindungsgemäßes Ausführungsbeispiel.

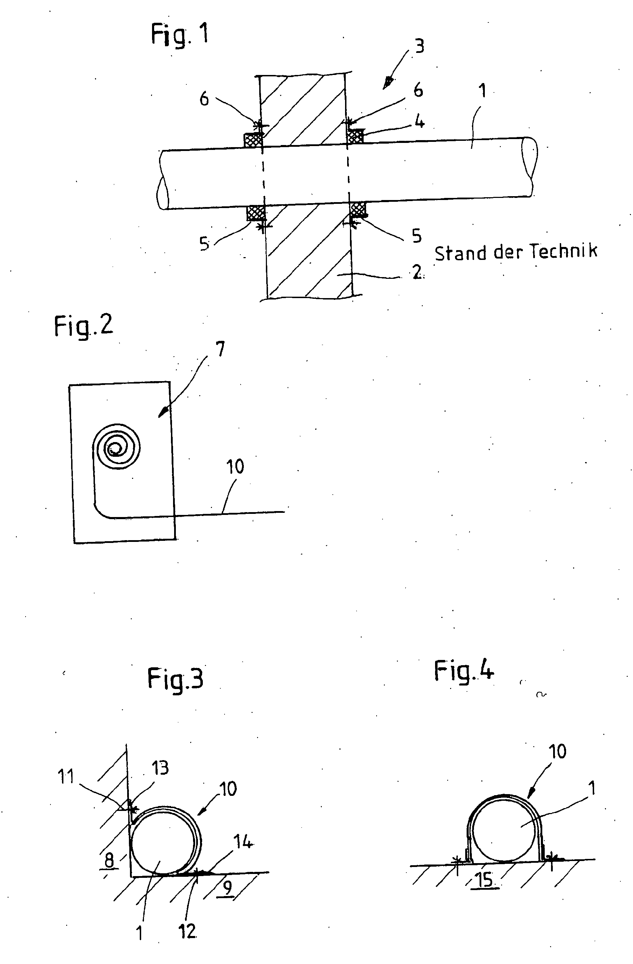

In Fig. 1 ist eine Wanddurchführung gezeigt, bei der ein Kunststoffrohr 1 durch eine Wand 2 geführt ist. Auf das Kunststoffrohr 1 ist eine Brandschutzmanschette 3 aufgebracht, die einen Streifen 4 aus Brandschutzmaterial und eine Manschette 5 zur Fixierung des Streifens aus Brandschutzmaterial auf dem Kunststoffrohr 1 aufweist. Die Manschette ist über eine Verschraubung 6 mit der Wand an der Wand befestigt.

Im Brandfall, wie er in Fig. 1 auf der linken Seite dargestellt ist, schäumt der Streifen 4 aus Brandschutzmaterial auf und verschließt das Kunststoffrohr 1. Die Manschette 5 sorgt dafür, dass sich das Brandschutzmaterial ausschließlich in Richtung auf das Kunststoffrohr 1 ausdehnt.

Fig. 2 zeigt eine Darreichungsform des erfindungsgemäßen Manschettenbandes. Hierzu ist das Manschettenband - bestehend aus Manschette 5 und Brandschutzstreifen 4 (siehe Fig. 1) - in einem Karton aufgerollt. Aus diesem kann es herausgezogen und anschließend auf die an die Gegebenheiten angepasste Länge abgelängt werden.

In Fig. 3 ist eine erste erfindungsgemäße Wand- oder Deckendurchführung gezeigt. Die Erfindung gestattet es, dass das Kunststoffrohr 1 in unmittelbarer Nähe von zwei aufeinandertreffenden Wänden 8, 9 geführt ist. Hierzu ist das erfindungsgemäße Brandschutzband 10 nur über einen Teil des Umfangs des Kunststoffrohrs 1 geschlungen und über Verschraubungen 11, 12 mit den Wänden 8, 9 verbunden. Das Brandschutzband weist schematisch angedeutete Befestigungselemente 13, 14 auf, die in Erstreckungsrichtung des Brandschutzbandes zur Befestigung der Manschette an den Wänden 8, 9 abgewinkelt von der Manschette abgehen.

Fig. 4 zeigt eine zweite erfindungsgemäße Ausführungsform der Wand- oder Deckendurchführung. Hier ist das Kunststoffrohr 1 nicht, wie bei Fig. 3, in einem Winkel zwischen zwei Wänden angeordnet, sondern an einer geraden Wand 15. Das erfindungsgemäße Brandschutzband 10 umschlingt das Kunststoffrohr in einem Winkel von ca. 180°.

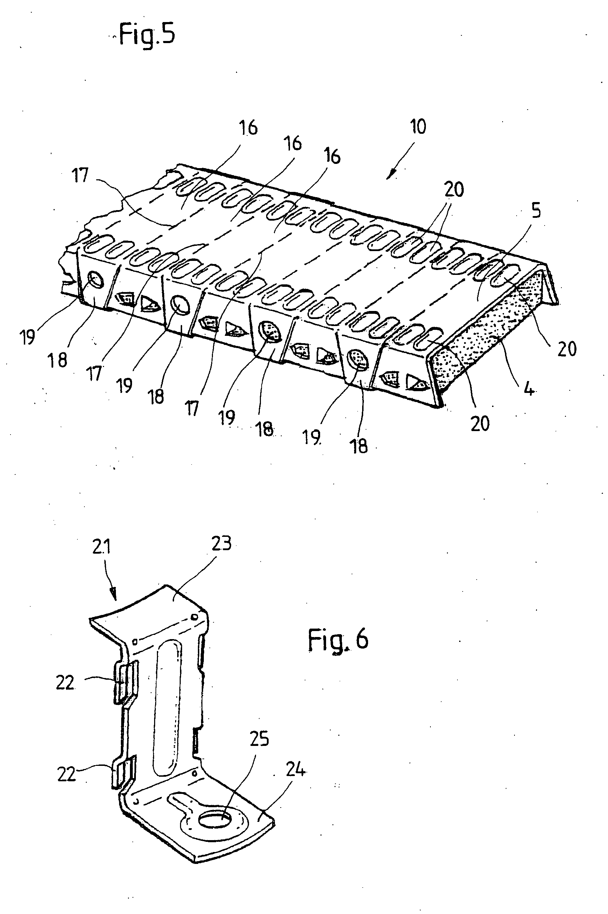

Fig. 5 zeigt einen Ausschnitt eines erfindungsgemäßen Brandschutzbandes 10. Das Brandschutzband 10 weist einen Streifen 4 aus Brandschutzmaterial und eine Manschette 5 zur Fixierung des Streifens aus Brandschutzmaterial auf einem Kunststoffrohr auf. Die Manschette weist einzelne Segmente 16 auf, die an Knickpunkten 17 gelenkig miteinander verbunden sind. An den Stellen 17 ist das Brandschutzband 10 ablängbar.

Die Manschette 5 umgreift den Streifen 4 seitlich. In regelmäßigen Abständen sind seitliche Lamellen 18 vorgesehen, die zur Befestigung des Brandschutzbandes 10 hochklappbar sind. Bei einem Aufklappen der Lamellen 18 um 1800 ist eine Befestigung des erfindungsgemäßen Brandschutzbandes gemäß Fig. 1 möglich. Hierzu sind in den Lamellen 18 Öffnungen 19 vorgesehen, durch die hindurch beispielsweise eine (nicht gezeigte) Schraube greifen kann.

Das Brandschutzband 10 weist ferner Einschübe 20 auf, die zur Aufnahme von Befestigungselementen dienen, wie sie beispielsweise in Fig. 6 gezeigt sind.

Fig. 6 zeigt ein Befestigungselement 21, das zur Befestigung des Brandschutzbandes an einer Wand oder Decke geeignet ist. Das Befestigungselement 21 weist Stege 22 auf, die in Eingriff mit den Einschüben 20 (siehe Fig. 5) der Manschette bringbar sind. Auf der einen Seite sichert das Befestigungselement 21 das Brandschutzband mit einem Ansatz 23 gegen Verrutschen auf dem Kunststoffrohr; auf der anderen Seite ist ein Ansatz 24 mit einer Öffnung 25 zur Befestigung des Brandschutzbandes an einer Wand oder Decke vorgesehen.

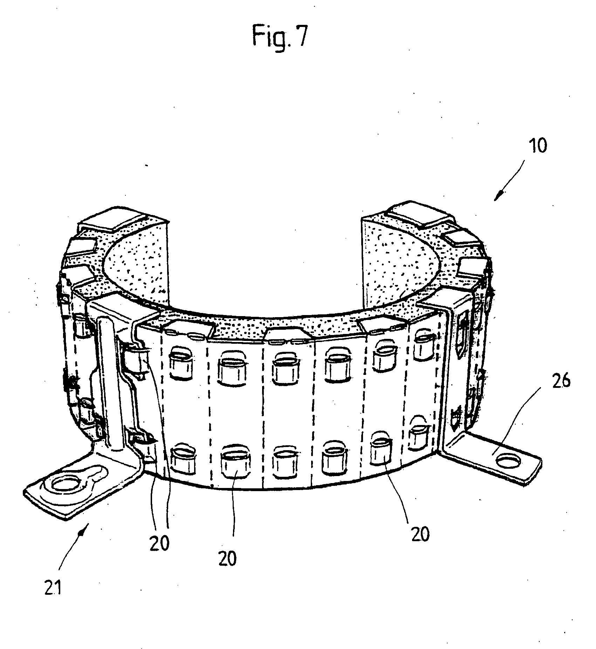

Fig. 7 zeigt ein erfindungsgemäßes Brandschutzband 10, wie es um ein (nicht gezeigtes) Kunststoffrohr geschlungen ist. Dabei umgreift das Brandschutzband 10 das (nicht gezeigte) Kunststoffrohr nicht vollständig, sondern lediglich teilweise.

In Fig. 7 linksseitig ist ein Befestigungselement 21 in die Einschübe 20 eingesetzt. In Fig. 7 rechtsseitig ist ein alternatives Befestigungselement 26 in die Einschübe 20 eingesetzt. Das Befestigungselement 26 weist lediglich einen oberen und einen unteren Steg zum Eingriff in einen jeweiligen Einschub 20 auf.

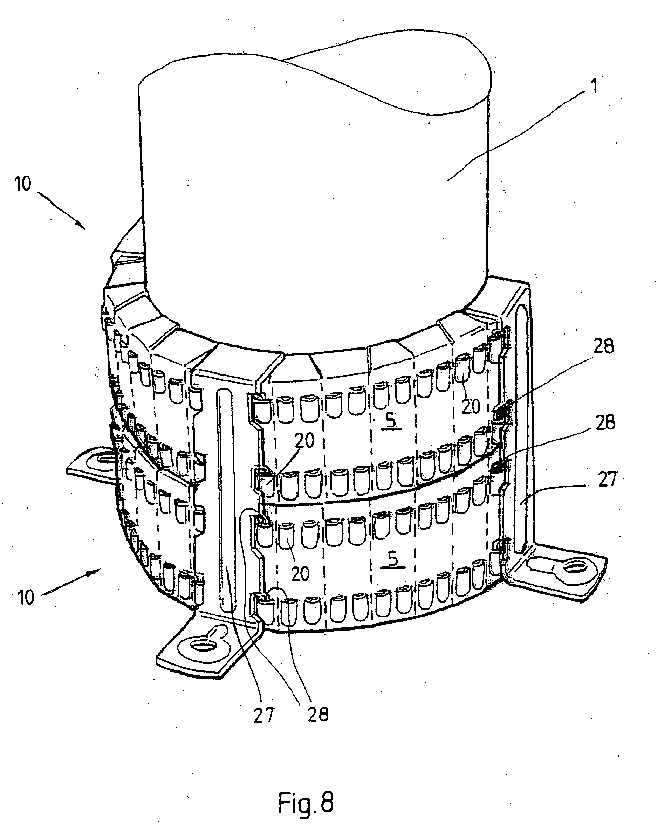

Fig. 8 zeigt eine erfindungsgemäße Wand- oder Deckendurchführung mit zwei hintereinander angeordneten Brandschutzbändern 10, die ein Kunststoffrohr 1 (teilweise) umschlingen. Die beiden Brandschutzbänder 10 sind über Befestigungselemente 27 verbunden, die mit insgesamt acht Stegen 28 in die entsprechenden Einschübe 20 der beiden Manschetten 5 eingreifen. Im übrigen wird bezüglich der näheren Ausgestaltung der Befestigungselemente 27 auf die vorstehenden Ausführungen verwiesen.

Bei dem dargestellten Ausführungsbeispiel sind die erfindungsgemäßen Brandschutzbänder 10 dort befestigt, wo das Kunststoffrohr 1 durch die Wand oder Decke hindurchgeht. Alternativ oder zusätzlich kann in Weiterbildung der Erfindung vorgesehen sein, dass das Brandschutzband bzw. die Brandschutzbänder 10 an mindestens einer Wand und/oder einer Decke befestigbar sind, die auf die Wand oder die Decke mit der Wanddurchführung stößt. Hierzu können die Befestigungselemente 27 (nicht gezeigte) Ansätze zur Befestigung an der Wand oder Decke aufweisen, die nicht - wie bei den Ausführungsformen gemäß Fig. 7 oder 8 - quer zur Erstreckungsrichtung angeordnet sind, sondern vielmehr in Erstreckungsrichtung des Brandschutzbandes 10. Damit ist eine Befestigung des Brandschutzbandes 10 möglich, wie sie in den Fign. 3 und 4 gezeigt ist. Sofern einsetzbare Befestigungselemente 21, 26, 27 verwendet werden sollen, können alternativ zu der gezeigten Orientierung der Einschübe 20 letztere alternativ in Erstreckungsrichtung des jeweiligen Brandschutzbandes 10 bzw. der jeweiligen Manschette 5 angeordnet sein. Eine optimale Kraftübertragung ist die Folge.

## Patentansprüche

1. Wand- oder Deckendurchführung für ein Kunststoffrohr (1),
mit einem auf dem Kunststoffrohr (1) angeordneten Streifen (4) aus Brandschutzmaterial,
und mit einer Manschette (5) zur Fixierung des Streifens (4) aus Brandschutzmaterial auf dem Kunststoffrohr (1),
**dadurch gekennzeichnet,**
**dass** der Streifen (4) aus Brandschutzmaterial und die Manschette (5) lediglich teilweise um das Kunststoffrohr (1) geschlungen sind.

2. Wand- oder Deckendurchführung nach Anspruch 1, **dadurch gekennzeichnet, dass** die Manschette (5) an mindestens einer Wand oder Decke (8, 9, 15) befestigt ist, die an die Wand oder Decke angrenzt, durch die die Durchführung geht.

3. Wand- oder Deckendurchführung nach Anspruch 1 oder Anspruch 2, **dadurch gekennzeichnet, dass** die Manschette (5) beidseitig des Kunststoffrohres (1) jeweils an einer Wand (8, 9) oder Decke befestigt ist.

4. Wand- oder Deckendurchführung nach Anspruch 1 oder Anspruch 2, **dadurch gekennzeichnet, dass** die Manschette (5) beidseitig des Kunststoffrohres (1) jeweils an einer Wand (8, 9) oder Decke befestigt ist, die winkelig zueinander angeordnet sind.

5. Wand- oder Deckendurchführung nach einem der Ansprüche 1 bis 4, **dadurch gekennzeichnet, dass** die Manschette (5) mit der Wand und/oder der Decke verschraubt ist.

6. Wand- oder Deckendurchführung nach einem der Ansprüche 1 bis 5, **dadurch gekennzeichnet, dass** die Wand- oder Deckendurchführung mindestens ein Befestigungselement (13, 14) umfasst, das In Erstreckungsrichtung der Manschette (5) zur Befestigung der Manschette (5) an der Wand und/oder Decke abgewinkelt von der Manschette (5) abgeht.

7. Wand- oder Deckendurchführung nach Anspruch 6, **dadurch gekennzeichnet, dass** das Befestigungselement (13, 14) lösbar mit der Manschette (5) verbunden ist.

8. Wand- oder Deckendurchführung nach Anspruch 6 oder Anspruch 7, **dadurch gekennzeichnet, dass** die Manschette (5) Einschübe aufweist, die in Erstreckungsrichtung der Manschette (5) angeordnet sind, und dass das Befestigungselement (13, 14) in die Einschübe eingreift.

9. Verwendung eines Brandschutzbandes (10) für eine Wand- oder Deckendurchführung für ein Kunststoffrohr (1) nach einem der Ansprüche 1 bis 8, dass durch eine Wand oder Decke geführt ist,
mit einem um das Kunststoffrohr (1) schlingbaren Streifen (4) aus Brandschutzmaterial,
und mit einer Manschette (5) zur Fixierung des Streifens (4) aus Brandschutzmaterial auf dem Kunststoffrohr (1),
**dadurch gekennzeichnet,**
**dass** das Brandschutzband (10) so ausgebildet ist, dass es das Kunststoffrohr (1) im eingebauten Zustand nur teilweise umgreift.

10. Verwendung eines Brandschutzbandes (10) nach Anspruch 9, **dadurch gekennzeichnet, dass** das Brandschutzband (10) an mindestens einer Wand und/oder Decke befestigbar ist, die auf die Wand oder die Decke mit der Wanddurchführung stößt.

11. Verwendung eines Brandschutzbandes (10) nach Anspruch 9 oder Anspruch 10, **dadurch gekennzeichnet, dass** das Brandschutzband (10) ein Befestigungselement (13, 14) aufweist, das in Erstreckungsrichtung der Manschette (5) zur Befestigung der Manschette (5) an der Wand und/oder Decke abgewinkelt von der Manschette (5) abgeht.

12. Verwendung eines Brandschutzbandes (10) nach Anspruch 11, **dadurch gekennzeichnet, dass** das Befestigungselement (13, 14) lösbar mit der Manschette (5) verbindbar ist.

13. Verwendung eines Brandschutzbandes (10) nach Anspruch 11 oder Anspruch 12, **dadurch gekennzeichnet, dass** die Manschette (5) Einschübe aufweist, die in Erstreckungsrichtung der Manschette (5) angeordnet sind, und dass das Befestigungselement (13, 14) in Eingriff mit den Einschüben bringbar ist.

## Claims

1. A wall or ceiling feedthrough for a plastic tube (1),
comprising a strip (4) made of a fire protection material that is arranged on the plastic tube (1),
and comprising a collar (5) for fixing the strip (4) made of fire protection material on the plastic tube (1),
**characterized in**
**that** the strip (4) made of fire protection material and the collar (5) are only partially wound around the plastic tube (1).

2. A wall or ceiling feedthrough according to claim 1, **characterized in that** the collar (5) is fastened to at least one wall or ceiling (8, 9, 15) that is adjacent to the wall or ceiling through which the feedthrough extends.

3. A wall or ceiling feedthrough according to claim or claim 2, **characterized in that** the collar (5) is respectively fastened to a wall (8, 9) or ceiling on both sides of the plastic tube (1).

4. A wall or ceiling feedthrough according to claim 1 or claim 2, **characterized in that** the collar (5) is respectively fastened to a wall (8, 9) or ceiling on both sides of the plastic tube (1), which are at an angle to one another.

5. A wall or ceiling feedthrough according to one of the claims 1 through 4, **characterized in that** the collar (5) is screwed with the wall and/or the ceiling.

6. A wall or ceiling feedthrough according to one of the claims 1 through 5, **characterized in that** the wall or ceiling feedthrough comprises at least one fastening element (13, 14) that, in the direction of extension of the collar (5), sticks out at an angle from the collar (5) for fastening the collar (5) to the wall and/or ceiling.

7. A wall or ceiling feedthrough according to claim 6, **characterized in that** the fastening element (13, 14) is connected to the collar (5) in a detachable manner.

8. A wall or ceiling feedthrough according to claim 6 or claim 7, **characterized in that** the collar (5) comprises insertions which are arranged in the direction of extension of the collar (5) and that the fastening element (13, 14) engages in the insertions.

9. A use of a fire protection strip (10) for a wall or ceiling feedthrough for a plastic tube (1) according to one of the claims 1 through 8, which tube is lead through a wall or ceiling,
comprising a strip (4) made of fire protection material that can be wound around the plastic tube (1),
and comprising a collar (5) for fixing the strip (4) made of fire protection material on the plastic tube (1),
**characterized in**
**that** the fire protection strip (10) is designed such that it surrounds the plastic tube (1) only partially when installed.

10. A use of a fire protection strip (10) according to claim 9, **characterized in that** the fire protection strip (10) can be fastened to at least one wall and/or ceiling which meets the wall or the ceiling comprising the wall feedthrough.

11. A use of a fire protection strip (10) according to claim 9 or claim 10, **characterized in that** the fire protection strip (10) comprises a fastening element (13, 14) that, in the direction of extension of the collar (5), sticks out at an angle from the collar (5) for fastening the collar (5) to the wall and/or ceiling.

12. A use of a fire protection strip (10) according to claim 11, **characterized in that** the fastening element (13, 14) is connected to the collar (5) in a detachable manner.

13. A use of a fire protection strip (10) according to claim 11 or claim 12, **characterized in that** the collar (5) comprises insertions which are arranged in the direction of extension of the collar (5) and that the fastening element (13, 14) can be brought into engagement with the insertions.

## Revendications

1. Passage traversant un mur ou un plafond, lequel passage est destiné à un tube en matière plastique (1),
comprenant une bande (4) en matière de protection contre le feu disposée sur le tube en plastique,
et comprenant une manchette (5) pour fixer la bande (4) en matière de protection contre le feu sur le tube en plastique (1),
**caractérisé en ce**
**que** la bande (4) en matière de protection contre le feu et la manchette (5) ne sont passées que partiellement autour du tube en plastique (1).

2. Passage traversant un mur ou un plafond selon la revendication 1, **caractérisé en ce que** la manchette (5) est fixée à au moins une paroi ou un plafond (8, 9, 15) qui est adjacent à la paroi ou au plafond à travers laquelle/lequel s'étend le passage.

3. Passage traversant un mur ou un plafond selon la revendication 1 ou la revendication 2, **caractérisé en ce que** la manchette (5) est respectivement fixée de part et d'autre du tube en plastique (1) à une paroi (8, 9) ou à un plafond.

4. Passage traversant un mur ou un plafond selon la revendication 1 ou la revendication 2, **caractérisé en ce que** la manchette (5) est respectivement fixée de part et d'autre du tube en plastique (1) à une paroi (8, 9) ou à un plafond qui font un angle entre eux.

5. Passage traversant un mur ou un plafond selon l'une des revendications 1 à 4, **caractérisé en ce que** la manchette (5) est vissée avec la paroi et/ou le plafond.

6. Passage traversant un mur ou un plafond selon l'une des revendications précédentes 1 à 5, **caractérisé en ce que** le passage traversant un mur ou un plafond comprend au moins un élément de fixation (13, 14) qui, dans la direction d'extension de la manchette (5), fait saillie de manière angulaire à partir de la manchette (5) pour fixer la manchette (5) à la paroi et/ou au plafond.

7. Passage traversant un mur ou un plafond selon la revendication 6, **caractérisé en ce que** l'élément de fixation (13, 14) est relié de manière amovible à la manchette (5).

8. Passage traversant un mur ou un plafond selon la revendication 6 ou la revendication 7, **caractérisé en ce que** la manchette (5) comprend des poches d'insertion qui sont disposés dans la direction d'extension de la manchette (5) et que l'élément de fixation (13, 14) vient en prise avec les poches d'insertion.

9. Utilisation d'une bande de protection contre le feu (10) pour un passage traversant un mur ou un plafond, lequel passage est destiné à un tube en plastique (1), selon l'une des revendications 1 à 8, lequel tube s'étend à travers une paroi ou un plafond,
comprenant une bande (4) en matière de protection contre le feu qui peut être passée autour du tube en plastique (1),
et comprenant une manchette (5) pour fixer la bande (4) en matière de protection contre le feu sur le tube en plastique (1),
**caractérisée en ce**
**que** la bande de protection contre le feu (10) est configurée de sorte qu'elle n'entoure le tube en plastique (1) que partiellement lorsqu'elle est installée.

10. Utilisation d'une bande de protection contre le feu (10) selon la revendication 9, **caractérisée en ce que** la bande de protection contre le feu (10) est susceptible d'être fixée à au moins une paroi et/ou un plafond qui se bute contre la paroi ou le plafond comprenant le passage traversant.

11. Utilisation d'une bande de protection contre le feu (10) selon la revendication 9 ou la revendication 10, **caractérisée en ce que** la bande de protection contre le feu (10) comprend un élément de fixation (13, 14) qui, dans la direction d'extension de la manchette (5), fait saillie de manière angulaire à partir de la manchette (5) pour fixer la manchette (5) à la paroi et/ou au plafond.

12. Utilisation d'une bande de protection contre le feu (10) selon la revendication 11, **caractérisée en ce que** l'élément de fixation (13, 14) est relié de manière amovible à la manchette (5).

13. Utilisation d'une bande de protection contre le feu (10) selon la revendication 11 ou la revendication 12, **caractérisée en ce que** la manchette (5) comprend des poches d'insertion qui sont disposés dans la direction d'extension de la manchette (5) et que l'élément de fixation (13, 14) peut être mis en prise avec les poches d'insertion.
